# EUROPÄISCHE PATENTANMELDUNG

(11) **EP 1 243 366 A1**
(43) Veröffentlichungstag der Anmeldung: **25.09.2002**
(21) Anmeldenummer: 02005182.7
(22) Anmeldetag: 08.03.2002
(51) Int. Cl.: B23C 5/10

(54) **Fräswerkzeug**

(30) Priorität: 22.03.2001 DE 20105015 U
(71) Anmelder: Busch & Co.KG, 51766 Engelskirchen (DE)
(72) Erfinder: Busch, Gert, 51766 Engelskirchen (DE)
(74) Vertreter: Patentanwälte Maxton & Langmaack

(57) **Zusammenfassung**

Die Erfindung betrifft ein rotierend einzusetzendes spanabhebendes Fräswerkzeug mit einem Spannschaft (1) und einem Arbeitsbereich (2), der eine Schneidenanordnung aufweist, die mehrere, gleichgerichtete, in Umfangsrichtung mit Abstand zueinander angeordnete und durch Keilnuten (6) gebildete Hauptschneiden (3) aufweist, die vom Spannschaft (1) in Richtung auf das freie Ende des Arbeitsbereichs (2) verlaufen und die jeweils auf ihrer der Schneidkante (3.1), in Drehrichtung gesehen, abgewandten Seite durch eine Fasenfläche (7) begrenzt sind, das dadurch gekennzeichnet ist, daß die Hauptschneiden (3) und die zugehörigen Fasenflächen (7) quer zu ihrer Ausrichtung jeweils durch mehrere, mit Abstand zueinander angeordnete Kerben erster Ordnung (4) sowie jeweils zwischen den Kerben erster Ordnung jeweils durch wenigstens eine Kerbe zweiter Ordnung (5) unterbrochen sind, wobei die Kerben erster Ordnung und die Kerben zweiter Ordnung jeweils der Hauptschneide (3) zugeordnete Nebenschneiden N begrenzen, daß die Kerben zweiter Ordnung eine geringere Tiefe aufweisen als die Kerben erster Ordnung und die Kerben erster Ordnung eine geringere Tiefe aufweisen als die Keilnuten (6), und daß die Kerben (4, 5) bezogen auf den Arbeitsbereich (2) jeweils auf Drallinien angeordnet sind.

## Beschreibung

In der Industrie, im Handwerk, aber auch in der Dentalmedizin werden rotierende spanabhebende Werkzeuge verwendet, die einen Spannschaft und einen Arbeitsbereich aufweisen, der eine Zylinderform, eine Kegelform oder eine Form mit gekrümmter Kontur aufweist. Der Arbeitsbereich ist mit Schneiden versehen, die wendelartig verlaufend angeordnet sind. Werkzeuge mit gekrümmter Kontur des Arbeitsbereichs werden in der Regel freihandgeführt. In der Industrie und im Handwerk werden derartige Werkzeuge zur Nachbearbeitung von komplizierten Oberflächengeometrien verwendet. Im Dentalbereich, und zwar sowohl für die Arbeiten im Dentallabor als auch für die Arbeit des Zahnarztes in der Praxis, werden derartige Werkzeuge in entsprechend kleinen Größenabmessungen ebenfalls eingesetzt.

An die Laufruhe und die Vibrationsfreiheit sowie an die Präzision, d.h. die Rundlaufgenauigkeit und Schneidengeometrie sowie auch an die Effektivität, d.h. an die Schneidleistung sowie an die Lebensdauer, insbesondere aber an das Arbeitsergebnis, d.h. die Oberflächenbeschaffenheit und Formgenauigkeit des zu bearbeitenden Teils werden hohe Anforderungen gestellt. Dies gilt insbesondere für den Bereich der Dentalmedizin, da es hier auf eine optimale, d.h. schonende und wirtschaftliche Behandlung eines Patienten ankommt.

Von Bedeutung ist, daß Materialien mit sehr unterschiedlichen Zerspanungseigenschaften zu bearbeiten sind. Im industriellen bzw. handwerklichen Bereich sind dies beispielsweise Leichtmetalle, Stahl, Grauguß, NE-Metalle, Nickel-Chrom-Legierungen, Chrom-Cobalt-Legierungen, Titan, Composit-Werkstoffe. Im Bereich des Dentallabors werden hierzu auch noch Edelmetalle, Keramik-Werkstoffe, Kunststoffe und Gips verwendet. Für den dentalmedizinischen Bereich ist ferner zu berücksichtigen, daß der menschliche Zahn als "Werkstoff" gesehen ineinander übergehende Bereiche mit unterschiedlichen Zerspanungseigenschaften aufweist, nämlich Schmelz als äußere harte Schicht und Dentin als innere weichere Schicht sowie auch Knochensubstanz.

Für diese Einsatzzwecke weisen derartige Werkzeuge Arbeitsbereiche mit nur geringen Durchmessern auf, die zwischen 1,0 und 6,00 mm liegen. Für den Spannschaft sind Durchmesser in Abstufungen von 1,6, 2,35 und 3,0 mm üblich.

In DE-A-199 01 929 wird ein rotierend einzusetzender Dentalfräser beschrieben, der zum einen eine Hauptschneiden bildende Verzahnung aufweist, die an einem einen Arbeitsbereich bildenden Kopf von der Spitze bis zum schaftseitigen Ende des Kopfes verläuft und eine sogenannte 1. Verzahnung bildet. Eine derartige Verzahnung stellt die Grundform eines jeden Fräsers dar. Diese erste Verzahnung ist mit zahlreichen Keileinschnitten versehen, deren Ausläufe Schneidkanten bilden und die eine sogenannte 2. Verzahnung bilden sollen. Es handelt sich dabei um die bekannte Form einer Kreuzverzahnung. Die Hauptschneiden sind dabei durch die quer verlaufenden Keileinschnitte unterbrochen. Des weiteren sind die Hauptschneiden durch Querhiebe unterbrochen. Diese sollen eine 3. Verzahnung bilden, die jedoch keine Schneiden mehr bilden sondern nur als Spanbrecher wirken.

Aus DE-U-299 12 979.9 ist ein Werkzeug zur Anwendung in der Zahnmedizin bekannt, bei dem der Arbeitsbereich mit Schneiden versehen ist, die jeweils auf ihrer der Schneidkante, in Drehrichtung gesehen, abgewandten Seite mit einer unter einem Winkel zur Schneidebene ausgerichteten Fasenfläche versehen sind. Jede Schneide ist durch mehrere mit Abstand zueinander angeordnete Kerben unterbrochen, die in Umfangsrichtung gesehen jeweils auf einem die aufeinanderfolgenden Schneiden kreuzenden Linienzug angebracht sind. Die die Hauptschneiden mit ihren Fasenflächen unterbrechenden Kerben bilden aufgrund der Winkelstellung der Fasenfläche mit ihren die Fasenflächen begrenzenden Kanten zusätzliche Nebenschneiden, die praktisch mit einem Teil ihrer Länge mit dem abzutragenden Material in Eingriff gelangen.

Der Erfindung liegt die Aufgabe zugrunde, ein noch deutlich verbessertes Fräswerkzeug zu schaffen.

Um bei Umdrehungszahlen von bis zu 80.000 min⁻¹ noch zu einer Verbesserung der Handhabung und zu einer Verbesserung des Arbeitsergebnisses zu gelangen, wird für ein rotierend einzusetzendes, spanabhebendes Werkzeug mit einem Spannschaft und einem Arbeitsbereich, der eine Schneidenanordnung aufweist, die mehrere gleichgerichtete, in Umfangsrichtung mit Abstand zueinander angeordnete und durch Keilnuten gebildete Hauptschneiden aufweist, die vom Spannschaft in Richtung auf das freie Ende des Arbeitsbereichs verlaufen, und die jeweils auf ihre der Schneidenkante in Drehrichtung gesehen abgewandten Seite durch eine Fasenfläche begrenzt sind, erfindungsgemäß vorgeschlagen, daß die Hauptschneiden und die zugehörigen Fasenflächen quer zu ihrer Ausrichtung jeweils durch mehrere, mit Abstand zueinander angeordnete Kerben erster Ordnung sowie jeweils zwischen den Kerben erster Ordnung jeweils durch wenigstens eine Kerbe zweiter Ordnung unterbrochen sind, wobei die Kerben erster Ordnung und die Kerben zweiter Ordnung jeweils der Hauptschneide zugeordnete mehrfach abgewinkelte Nebenschneiden begrenzen, daß die Kerben zweiter Ordnung eine geringere Tiefe aufweisen als die Kerben erster Ordnung und die Kerben erster Ordnung eine geringere Tiefe aufweisen als die Keilnuten, und daß die Kerben, bezogen auf den Arbeitsbereich, jeweils auf Drallinien angeordnet sind.
Durch die Anordnung von (tiefen) Kerben erster Ordnung und (weniger tiefen) Kerben zweiter Ordnung wird die Hauptschneide nicht nur mehrfach unterteilt, sondern jede Kerbe bildet eine im wesentlichen unter einem Winkel quer zur Hauptschneide ausgerichtete abgewinkelte Nebenschneide mit unterschiedlicher Ausrichtung. Hierbei ist insbesondere das Vorhandensein einer der Hauptschneide zugeordneten Fasenfläche bedeutsam, die eine große Eingriffslänge der Nebenschneidenkonturen gewährleistet. Von Bedeutung ist hierbei, daß auch an den weniger tiefen Kerben zweiter Ordnung derartige Nebenschneiden gebildet werden, so daß insbesondere die Kerben zweiter Ordnung nicht ausschließlich als Spanbrecher dienen, sondern ebenfalls eine spanabhebende Wirkung besitzen. Da jedoch die gewinkelt ausgebildete Nebenschneidenkontur an den Kerben zweiter Ordnung jeweils eine geringere Erstreckung und damit auch nur eine geringe Einwirktiefe aufweist, wird insgesamt eine deutlich glattere Oberfläche des bearbeiteten Materials erzielt. Gleichwohl ist eine bessere Zerspanungsleistung durch die erleichterte Eindringfähigkeit der zahlreichen, durch Kerben beider Ordnungen abgeteilten kurzen Hauptschneiden gegeben.

Die Anordnung der Drallinien kann in bezug auf die Drehachse des Werkzeugs rechts- oder linkssinnig ausgebildet sein.

Weitere Ausgestaltungen und Vorteile der Erfindung sind in den in den Unteransprüchen aufgeführten Merkmalen sowie der nachfolgenden Beschreibung eines Ausführungsbeispiels anhand von Zeichnungen zu entnehmen.

### Es zeigen:

- Fig. 1: in vergrößerter Darstellung ein Dental-instrument,
- Fig. 2: in stark vergrößerter Darstellung den in Fig. 1 gekennzeichneten Schneidenbereich A,
- Fig. 3: einen Schnitt gemäß der Linie III-III in Fig. 2,
- Fig. 4: einen Schnitt gemäß der Linie IV-IV in Fig. 2,
- Fig. 5: schematisch unterschiedliche Formen für Arbeitsbereiche.

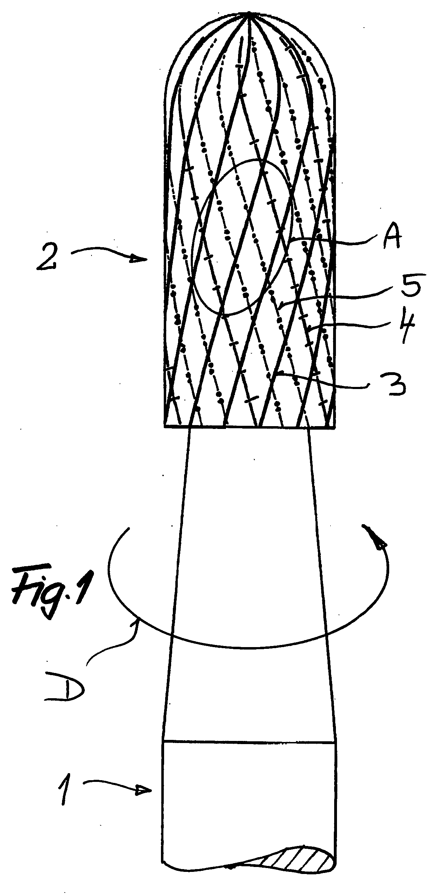

Das in Fig. 1 vergrößert dargestellte spanabhebende Werkzeug weist einen Spannschaft 1 und einen Arbeitsbereich 2 auf, der beispielsweise einen Durchmesser von weniger als 6 mm aufweist. Der Arbeitsbereich ist mit einer Vielzahl rechtsdrehend wendelartig verlaufender Hauptschneiden 3 versehen, die hier lediglich durch stark ausgezogene Striche dargestellt sind.

Jede Hauptschneide 3 ist durch Kerben 4 erster Ordnung sowie Kerben 5 zweiter Ordnung unterbrochen, die hier vereinfachend durch entsprechende gegenläufig zu den Linien der Hauptschneiden 3 verlaufenden Drallinien angedeutet sind. Die Kerben erster Ordnung sind hierbei durch eine "Strich-Querstrich-Strich" gekennzeichnete Drallinie angedeutet, während die Kerben zweiter Ordnung durch eine parallel laufende "Strich-Punkt-Punkt-Strich"-Folge gekennzeichnete Drallinie gekennzeichnet sind. Die sich hieraus ergebenden Schneidengeometrien werden anhand der stark vergrößerten Darstellung gemäß Fig. 2 und der zugehörigen Schnittdarstellung gemäß Fig. 3 näher erläutert.

Wie die stark vergrößerte Darstellung gemäß Fig. 2 sowie die zugehörigen Schnitte in Fig. 3 und 4 erkennen lassen, werden die Hauptschneiden 3 durch gleichgerichtete, in Umfangsrichtung mit Abstand zueinander angeordnete Keilnuten 6 gebildet, die jeweils auf ihrer der Schneidkante 3.1 in Drehrichtung gesehen abgewandten Seite durch eine Fasenfläche 7 begrenzt sind.

Insbesondere die Fasenausbildung der Hauptschneiden bewirkt gleichzeitig eine robust gestaltete Schneidenspitze und einen großzügig bemessenen Spanraum hinter der Schneide bzw. vor der folgenden Schneide. Die Stabilität der Hauptschneide wird dabei entscheidend durch den relativ gering bemessenen Freiwinkel α, unter dem die Fase verläuft und die eigenliche Fasenbreite bestimmt. Die eine Fase bildenden Flächen können auch kreis- oder bogenförmig gewölbt ausgeführt werden.

Die Hauptschneiden 3 sind, wie die Aufsicht gemäß Fig. 2 zeigt, durch die Kerben 4 erster Ordnung unterbrochen. Jeweils zwischen zwei Kerben 4 erster Ordnung sind dann zwei Kerben 5 zweiter Ordnung vorgesehen, die die Hauptschneide 3 mit geringerer Tiefe unterbrechen.

Dadurch, daß die Kerben 4 und 5 auf entsprechenden Drallinien liegen, ergibt sich eine Schrägstellung in ihrer Ausrichtung in bezug auf die Hauptschneiden 3. Die Kerben 4 und 5 sind ferner, wie die Schnittdarstellung gemäß Fig. 3 zeigt, ebenso wie die die Hauptschneiden teilenden Keilnuten in Keilform ausgeführt. Die Keilform der Kerben 4, 5, ist bei dem dargestellten Ausführungsbeispiel, wie die Schnittdarstellung in Fig. 3 zeigt, jeweils bezogen auf eine durch die Spitze S der Keilform geführte Radialachse R mit ihren Keilflanken K unsymmetrisch ausgerichtet. Es ist aber auch eine symmetrische Ausrichtung möglich.

Durch die Keilform der Kerben 4 und 5 in Verbindung mit ihrer durch die Anordnung auf Drallinien gegebenen Schrägstellung in bezug auf die Schneiden 3 bildet jede Kerbe zur Hauptschneidkante 3.1 eine Folge von Nebenschneiden N mit abgewinkeltem Verlauf. Der Teil N1 einer derartigen Nebenschneide wird jeweils durch die Kante der Kerben (4, 5) mit der Fasenfläche 7 gebildet. Der Teil N2 wird durch die unmittelbar anschließende Kante der Kerbe in der Schneidenfront bzw. Schneidenbrust a und schließlich der Teil N3 durch die daran anschließende, in der Schneidenbrust a verlaufende Kante gebildet.

Des weiteren wird auf der Gegenseite zu N1 die Kante N4 als Begrenzungslinie Kerbe-Fasenfläche gebildet.

Die Kante N1 wird bei dem Ausführungsbeispiel eines rechtsdrehenden Werkzeugs (Pfeil D) mit rechtssinnigen Dralllinien der Hauptschneiden oder gerade verlaufenden Hauptschneiden wirksam, weil die Ausrichtung der Drallinien der Kerben linkssinnig erfolgt. Sofern die Ausrichtung der Dralllinien der Kerben ebenfalls rechtssinnig ausgeführt wird, sind entsprechend die gegenüberliegenden Kanten N4 als Schneiden wirksam.

Wie im Schnitt gem. Fig. 3 angedeutet, können die Kerben jeweils mit unterschiedlich langen, aber auch gleich langen Schenkeln bzw. in der realen Geometrie als gewinkelte Flächen zur Rechtwinkligen bzgl. der Rotationsachse ausgeführt werden.

Dabei können verschiedenste Variationen erfolgen, die sich hinsichtlich der Position der Schenkellängen zur Werkzeugspitze unterscheiden. Variiert man diese mit den Variationsmöglichkeiten der Drallinienführung rechts. bzw. linkssinnig in unterschiedlichsten Winkelkombinationen und den Möglichkeiten der Ausrichtung das Dralls der Hauptscheide und denen der Länge der Fasenkanten N1 bzw. N4, so lassen sich vielfältige, auf den jeweiligen Anwendungsbereich bezogen, vortrefflich fräsende Kombinationen erstellen.

Wie Fig. 4 erkennen läßt, bildet die Fasenfläche 7 einen positiven Freiwinkel α, während die Spanfläche a unter einem Spanwinkel γ ausgerichtet ist. Der Freiwinkel α, liegt zweckmäßigerweise zwischen α > 0° bis α, = 15°. Der Spanwinkel γ liegt zwischen γ = + 10° bis γ = - 25° .

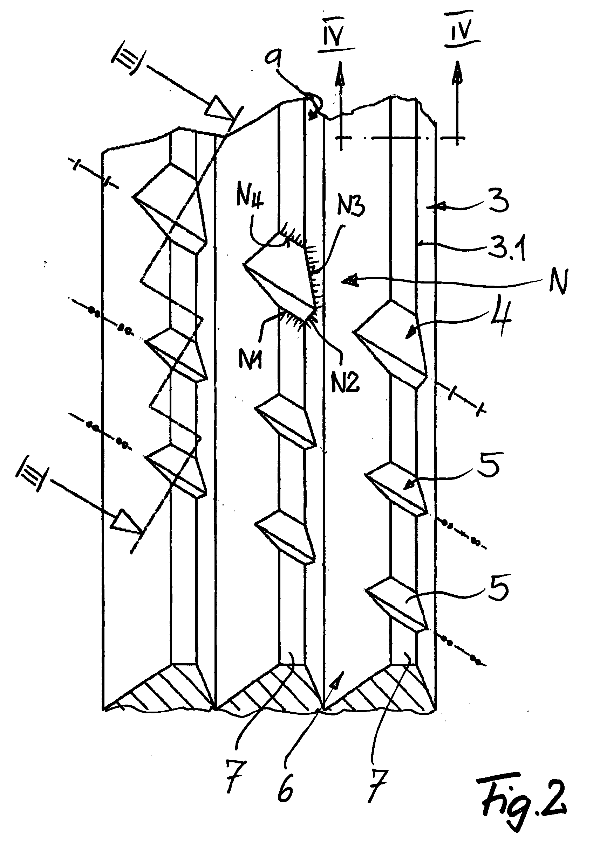

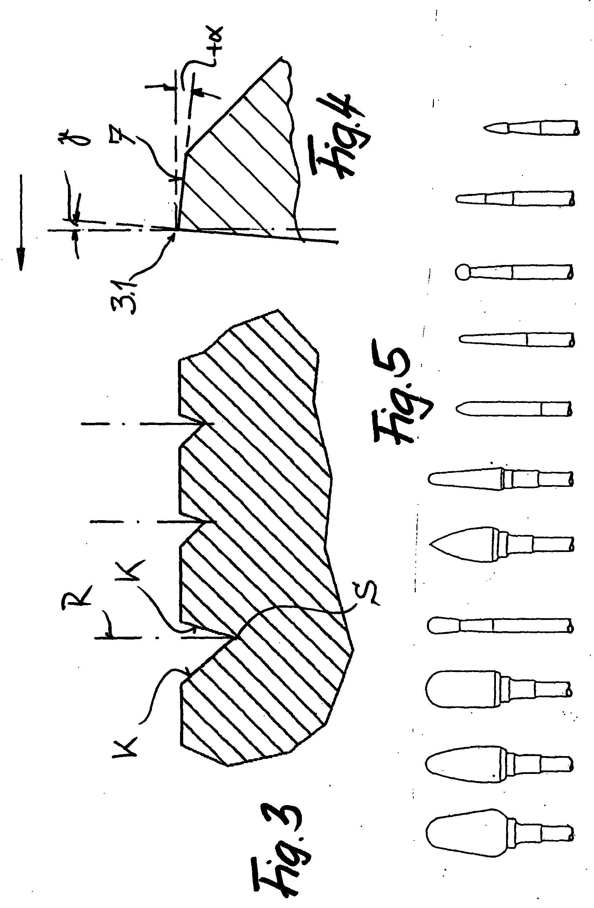

In Fig. 5 sind schematisch unterschiedliche Konturen für den Arbeitsbereich 2 dargestellt, wie sie vorteilhaft in Verbindung mit der neuerungsgemäßen Schneidengeometrie eingesetzt werden.

## Patentansprüche

1. Rotierend einzusetzendes spanabhebendes Fräswerkzeug mit einem Spannschaft (1) und einem Arbeitsbereich (2), der eine Schneidenanordnung aufweist, die mehrere, gleichgerichtete, in Umfangsrichtung mit Abstand zueinander angeordnete und durch Keilnuten (6) gebildete Hauptschneiden (3) aufweist, die vom Spannschaft (1) in Richtung auf das freie Ende des Arbeitsbereichs (2) verlaufen und die jeweils auf ihrer der Schneidkante (3.1), in Drehrichtung gesehen, abgewandten Seite durch eine Fasenfläche (7) begrenzt sind, **dadurch gekennzeichnet, daß** die Hauptschneiden (3) und die zugehörigen Fasenflächen (7) quer zu ihrer Ausrichtung jeweils durch mehrere, mit Abstand zueinander angeordnete Kerben erster Ordnung (4) sowie jeweils zwischen den Kerben erster Ordnung jeweils durch wenigstens eine Kerbe zweiter Ordnung (5) unterbrochen sind, wobei die Kerben erster Ordnung und die Kerben zweiter Ordnung jeweils der Hauptschneide (3) zugeordnete Nebenschneiden N begrenzen, daß die Kerben zweiter Ordnung eine geringere Tiefe aufweisen als die Kerben erster Ordnung und die Kerben erster Ordnung eine geringere Tiefe aufweisen als die Keilnuten (6), und daß die Kerben (4, 5) bezogen auf den Arbeitsbereich (2) jeweils auf Drallinien angeordnet sind.

2. Werkzeug nach Anspruch 1, **dadurch gekennzeichnet, daß** die Kerben erster Ordnung und die Kerben zweiter Ordnung auf zueinander parallel verlaufenden Drallinien angeordnet sind.

3. Werkzeug nach Anspruch 1 oder 2, **dadurch gekennzeichnet, daß** die Kerben erster Ordnung und die Kerben zweiter Ordnung einen Keilquerschnitt aufweisen.

4. Werkzeug nach einem der Ansprüche 1 bis 3, **dadurch gekennzeichnet, daß** die Schenkellängen (K) der Keilquerschnitte der Kerben erster Ordnung und den Kerben zweiter Ordnung in ihren Proportionen identisch ausgebildet sind.

5. Werkzeug nach einem der Ansprüche 1 bis 3, **dadurch gekennzeichnet, daß** die Schenkellängen (K) der Keilquerschnitte der Kerben erster Ordnung und der Kerben zweiter Ordnung in ihren Proportionen nicht identisch ausgebildet sind.

6. Werkzeug nach einem der Ansprüche 1 bis 5, **dadurch gekennzeichnet, daß** die Schenkellängen (K) der Keilquerschnitte sowohl der Kerben erster Ordnung, als auch der Kerben zweiter Ordnung jeweils gleich lang {symmetrisch) ausgebildet sind.

7. Werkzeug nach einem der Ansprüche 1 bis 5, **dadurch gekennzeichnet, daß** die Schenkellängen (K)der Keilquerschnitte sowohl der Kerben erster Ordnung. als auch der Kerben zweiter Ordnung jeweils ungleich lang ausgebildet sind.

8. Werkzeug nach einem der Ansprüche 1 bis 7, **dadurch gekennzeichnet, daß** die Hauptschneiden (3) jeweils gegenläufig zu den Drallinien der Kerben (4, 5) ausgerichtet sind.

9. Werkzeug nah einem der Ansprüche 1 bis 7, **dadurch gekennzeichnet, daß** die Hauptschneiden (3) jeweils gleichläufig zu den Drallinien der Kerben {4, 5) ausgerichtet sind.
